# EUROPEAN PATENT APPLICATION

(11) **EP 4 685 823 A1**
(43) Date of publication of application: **28.01.2026**
(21) Application number: 24916656.2
(22) Date of filing: 13.12.2024
(51) Int. Cl.: H01F 6/06, H01F 36/00, H01F 6/00

(54) **SUPERCONDUCTING FLUX PUMP HAVING VOLT-LEVEL DIRECT-CURRENT VOLTAGE OUTPUT AND EXCITATION EXPERIMENTAL SYSTEM**

(30) Priority: 10.01.2024 CN 202410034165
(71) Applicant: Sichuan University, Chengdu, Sichuan 610041 (CN)
(72) Inventor: WANG, Wei, Chongqing 400032 (CN); WU, Chenghuai, Chengdu, Sichuan 610599 (CN); ZHANG, Mengchao, Zhumadian, Henan 463613 (CN); ZHOU, Li, Chengdu, Sichuan 611833 (CN); TANG, Fuling, Ziyang, Sichuan 642372 (CN); LIU, Peng, Chongqing 404048 (CN)
(74) Representative: Metida
(86) International application number: PCT/CN2024/139110
(87) International publication number: WO 2025/148609

(57) **Abstract**

The present invention relates to a superconducting flux pump having volt-level direct-current voltage output and an excitation system. A three-phase alternating-current core and a direct-current bias core are used to form a magnetically coupled air gap to form a traveling wave magnetic field. The traveling wave magnetic field acts on a superconducting stator to generate a direct-current voltage output. The present invention achieves volt-level direct-current voltage output from superconducting flux pumps, reduces the power supply cost of high-temperature superconducting magnets, and enables rapid charging of superconducting coils and operation in a continuous current mode.

## Description

### BACKGROUND OF THE INVENTION

### 1. Technical Field

The present invention belongs to the technical field of superconducting flux pumps, and relates to a superconducting flux pump having volt-level direct-current voltage output and an excitation system.

### 2. Description of Related Art

Superconducting magnets are of great importance in the field of superconducting power application. Compared with traditional permanent magnets and common electromagnets, superconducting magnets have a lower weight and a smaller size and are able to generate higher-intensity magnetic fields and extremely low in loss. The superconducting magnets are applied to various fields including the medical field, the energy field and the transportation field because of their high performance, and as key components of various superconducting devices, provide high-intensity and high-stability magnetic fields.

The superconducting magnets need to work in a persistent current mode. A flux pump is used as a contactless power supply to inject a direct current into a closed loop formed by a superconducting stator and a superconducting magnet, and at the same time, compensate for a current attenuation caused by flux creep and soldering resistance. Chinese Patent Publication No.CN205789468U describes in detail the structure and operating principle of a linear flux pump. However, traditional contact type direct-current power supplies have a high cost, and the linear flux pump has a small effective coupling length, generates a small output voltage and cannot realize quick excitation and current regulation of a superconducting magnet, thus being only suitable for maintaining the current of the superconducting magnet.

In view of this, how to increase the effective coupling length of a flux pump on a superconducting stator to increase the output voltage to the volt level is an issue urgently to be settled. The proper settlement of this issue may effectively promote the industrial application of high-temperature superconducting magnets and superconducting flux pumps.

### BRIEF SUMMARY OF THE INVENTION

To settle the abovementioned technical issue, the present invention provides a superconducting flux pump having volt-level direct-current voltage output and an excitation system.

In a first aspect, the present invention provides a superconducting flux pump having volt-level direct-current voltage output, including a three-phase alternating-current core, a direct-current bias core, a three-phase alternating-current winding, a direct-current bias winding, and a cylindrical housing disposed around an outer side of the direct-current bias core. An end of the direct-current bias core is connected to an end of the cylindrical housing.

Slots are formed in an outer side of the three-phase alternating-current core, and the three-phase alternating-current winding is wound in the slots of the three-phase alternating-current core. The direct-current bias winding is wound around the outer side of the direct-current bias core. An end of the three-phase alternating-current core is arranged close to an end of the direct-current bias core. A magnetically coupled air gap is formed between the three-phase alternating-current core and the cylindrical housing.

A magnetic field, generated after three-phase power is applied to the three-phase alternating-current winding, is conducted through the corresponding core to form an alternating traveling wave magnetic field at the magnetically coupled air gap between the slots and the cylindrical housing. A magnetic field generated by the direct-current bias winding is conducted through the corresponding core to generate a direct-current bias magnetic field at the magnetically coupled air gap between the slots and the cylindrical housing. After the traveling wave magnetic field and the direct-current bias magnetic field are superimposed, a biased traveling wave magnetic field is generated at the magnetically coupled air gap, and the alternating traveling wave magnetic field, after being biased by the direct-current bias magnetic field, acts on a superconducting stator at the magnetically coupled air gap to generate a direct-current voltage output.

In a second aspect, the present invention provides an excitation system based on a superconducting flux pump having volt-level direct-current voltage output, including:

the superconducting flux pump having volt-level direct-current voltage output and a superconducting closed-loop magnet. The superconducting closed-loop magnet includes a superconducting stator and a superconducting magnet. The superconducting stator has an end arranged at the magnetically coupled air gap of the superconducting flux pump as well as an end connected to the superconducting magnet.

After the traveling wave magnetic field and the direct-current bias magnetic field are superimposed, the biased traveling wave magnetic field is generated at the magnetically coupled air gap, and acts on the superconducting stator at the magnetically coupled air gap to generate a direct-current voltage output.

Based on the above technical solution, the invention may be improved as follows.

Further, the direct-current bias core is fixed to a disc; an end of the cylindrical housing is fixed around the disc; the cylindrical housing is disposed around the outer side of the direct-current bias core; and a magnetic field generated by the direct-current bias core passes through the disc, the cylindrical housing, the slots and the three-phase alternating-current core to return to the direct-current bias core, and the direct-current bias magnetic field is generated between the slots and the cylindrical housing.

Further, the direct-current bias winding is arranged at an end of the three-phase alternating-current winding, an end of the direct-current bias core is fixed to a disc, and an end of the cylindrical housing is fixed around the disc.

Further, the direct-current bias windings are arranged at two ends of the three-phase alternating-current winding, and the direct-current bias core has an end fixed to a disc as well as an end fixed to a disc; and the cylindrical housing has an end fixed around one disc as well as an end fixed around the other disc.

Further, the traveling wave magnetic field acts on the superconducting stator at the magnetically coupled air gap to generate a direct-current voltage.

Further, the superconducting stator is arranged at the magnetically coupled air gap between the slots and the cylindrical housing by spiral winding.

Further, the superconducting magnet is formed by connecting in series or parallel, which are concentrically stacked with least one superconducting double-pancake coil, and multiple concentrically stacked superconducting coils are fixed by means of a support assembly.

Further, a direction of the superconducting stator is perpendicular to an advancing direction of the traveling wave magnetic field generated by the three-phase alternating-current winding.

Further, the superconducting stator is arranged at the magnetically coupled air gap of the superconducting flux pump by spiral winding.

The present invention has the following beneficial effects:
(1) The present invention achieves volt-level direct-current voltage output from superconducting flux pumps, thereby realizing quick current regulation and high-current maintenance of superconducting magnets and promoting further development of the excitation technique of the superconducting magnets and industrial application of the superconducting flux pumps.
(2) The present invention adopts the magnetizing principle in flux dynamics, a closed loop is formed by the superconducting stator and a superconducting coil, excitation of magnets is realized without long-term connection to an external direct-current power supply, and because the magnetizing principle is different from the prior art, the dependence of high-temperature superconducting magnets on an expensive direct current source is eliminated, thereby greatly reducing the power supply cost of the high-temperature superconducting magnets.
(3) The present invention does not use a current lead, thus greatly reducing the burden on refrigeration systems and enabling rapid charging of superconducting coils and operation in a persistent current mode; in addition, a current attenuation caused by flux creep and soldering resistance in the operating process is supplemented in real time, thereby greatly reducing energy consumption in the operating process.

### BRIEF DESCRIPTION OF THE SEVERAL VIEWS OF THE DRAWINGS

FIG. 1 is a sectional view of a superconducting flux pump having volt-level direct-current voltage output according to Embodiment 1 of the present invention.
FIG. 2 is a sectional view of the superconducting flux pump according to an optional implementation of Embodiment 1 of the present invention.
FIG. 3 is a schematic three-dimensional diagram of the superconducting flux pump having volt-level direct-current voltage output.
FIG. 4 is a schematic structural diagram of a three-phase alternating-current core.
FIG. 5 is a schematic excitation diagram of the superconducting flux pump having volt-level direct-current voltage output and a superconducting closed-loop magnet.
FIG. 6 is a schematic connection diagram of a superconducting magnet and a superconducting stator.

Reference signs: 100, superconducting flux pump; 101, three-phase alternating-current core; 102, direct-current bias core; 103, three-phase alternating-current winding; 104, direct-current bias winding; 105, cylindrical housing; 106, slot; 107, disc; 201, superconducting stator; 202, superconducting magnet.

### DETAILED DESCRIPTION OF THE INVENTION

To better clarify the objectives, technical solutions and advantages of the embodiments of the present invention, the technical solutions in the embodiments of the present invention are clearly and completely described below in conjunction with accompanying drawings of the embodiments of the present invention. Obviously, the embodiments described below are merely illustrative ones, and are not all possible ones of the present invention. Generally, components in the embodiments of the present invention described and illustrated in the drawings may be arranged and designed by means of different configurations.

### Embodiment 1

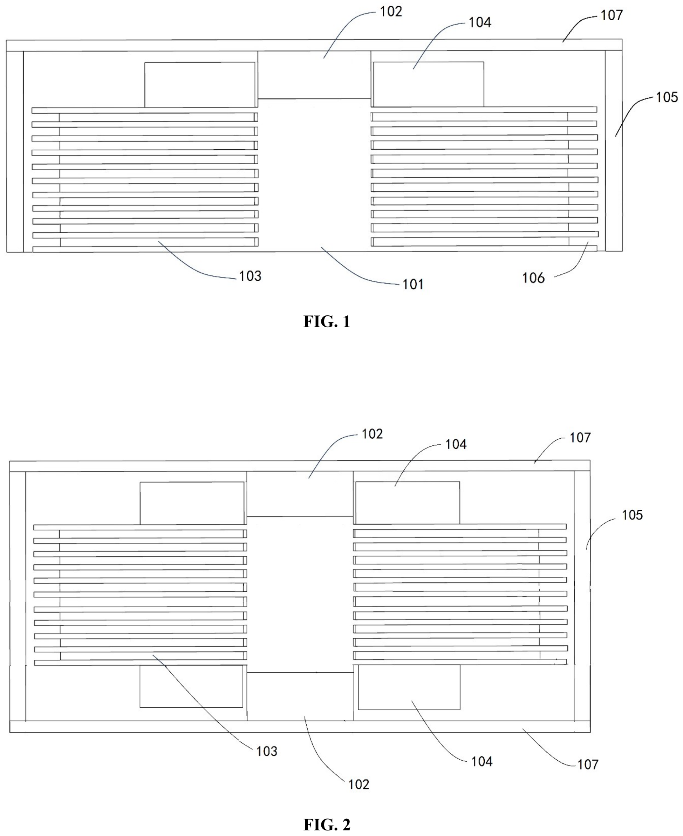

As one embodiment, as shown in FIG. 1, to increase the effective coupling length of a flux pump on a superconducting stator to increase the output voltage of the flux pump to the volt level so as to realize high-current output and quick current regulation of a magnet, this embodiment provides a superconducting flux pump having volt-level direct-current voltage output, including a three-phase alternating-current core 101, a direct-current bias core 102, a three-phase alternating-current winding 103, a direct-current bias winding 104, and a cylindrical housing 105 disposed around an outer side of the direct-current bias core 102. One end of the direct-current bias core 102 is connected to one end of the cylindrical housing 105.

Slots 106 are formed in an outer side of the three-phase alternating-current core 101, and the three-phase alternating-current winding 103 is wound in the slots 106 of the three-phase alternating-current core 101. The direct-current bias winding 104 is wound around the outer side of the direct-current bias core 102. One end of the three-phase alternating-current core 101 is arranged close to one end of the direct-current bias core 102. A magnetically coupled air gap is formed between the three-phase alternating-current core 101 and the cylindrical housing 105.

A magnetic field, generated after three-phase power is applied to the three-phase alternating-current winding 103, is conducted through the corresponding core to generate an alternating traveling wave magnetic field at the magnetically coupled air gap between the slots 106 and the cylindrical housing 105. A magnetic field generated by the direct-current bias winding 104 is conducted through the corresponding core to generate a direct-current bias magnetic field at the magnetically coupled air gap between the slots 106 and the cylindrical housing 105. After the traveling wave magnetic field and the direct-current bias magnetic field are superimposed, a biased traveling wave magnetic field is generated at the magnetically coupled air gap, and the alternating traveling wave magnetic field, after being biased by the direct-current bias magnetic field, acts on a superconducting stator 201 at the magnetically coupled air gap to generate a direct-current voltage output.

The superconducting flux pump is a device for contactless charging of a superconducting magnet. The traveling wave magnetic field generated at the magnetically coupled air gap is coupled with flux quanta on the superconducting stator and causes the flux quanta to move directionally to output a direct-current voltage so as to generate a direct-current current in the superconducting magnet.

The superconducting stator 201 is arranged at the magnetically coupled air gap formed between the three-phase alternating-current core 101 and the cylindrical housing 105, such that the effective coupling length is effectively increased, thus further increasing the output voltage of the superconducting flux pump.

In actual application, the superconducting flux pump may adopt more slot structures to extend the area of the magnetically coupled air gap of the flux pump so as to increase the effective coupling length of the superconducting stator to increase the direct-current voltage output. At least one direct-current bias winding 104 is adopted. In a case where the superconducting flux pump adopts more slot structures, more direct-current bias windings 104 may be adopted to provide a sufficient direct-current bias magnetic field.

In actual application, the cores of the superconducting flux pump are generally made from electrical pure iron, oriented silicon steel sheets, non-oriented silicon steel sheets, iron-based amorphous materials and other materials, and have the advantages of good magnetic conductivity, high saturated magnetic intensity and low iron loss.

In actual application, the superconducting flux pump may be refrigerated in liquid nitrogen/liquid helium in use or may be used outside a low-temperature Dewar.

Optionally, the three-phase alternating-current core 101 and the direct-current bias core 102 are connected by means of screws.

As an optional implementation, as shown in FIG. 1, the direct-current bias core 102 is fixed to a disc 107, and one end of the cylindrical housing 105 is fixed around the disc 107.

As an optional implementation, as shown in FIG. 1, the direct-current bias winding (104) is arranged at one end of the three-phase alternating-current winding 103, one end of the direct-current bias core 102 is fixed to the disc 107, and the one end of the cylindrical housing 105 is fixed around the disc 107.

As an optional implementation, as shown in FIG. 2, the direct-current bias windings (104) are arranged at two ends of the three-phase alternating-current winding 103, one end of the direct-current bias core 102 is fixed to a disc 107, and the other end of the direct-current bias core 102 is fixed to a disc 107; and one end of the cylindrical housing 105 is fixed around one disc 107, and the other end of the cylindrical housing 105 is fixed around the other disc 107. That is, the direct-current bias windings 104 are arranged at the two ends of the three-phase alternating-current winding 103, and one disc 107 is fixed to each of the two ends of the cylindrical housing 105.

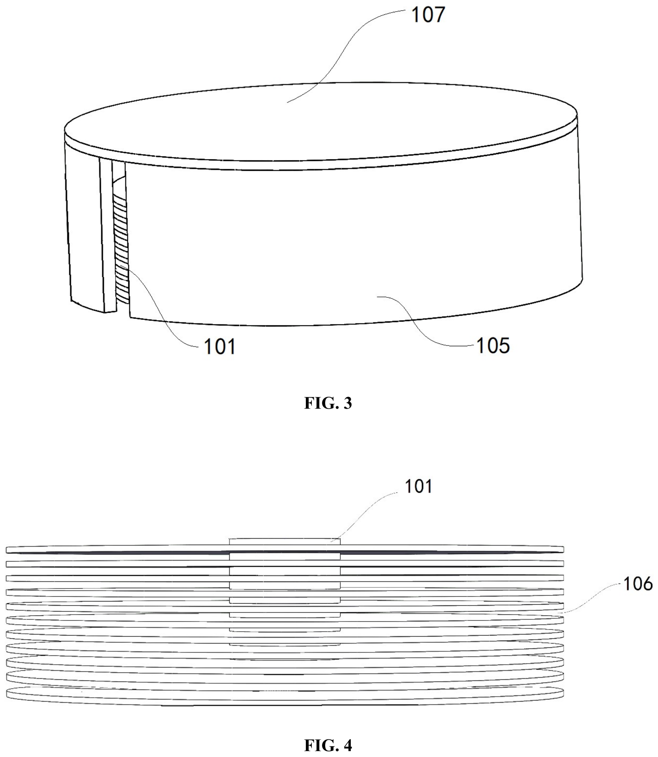

As shown in FIG. 3 which is a schematic three-dimensional diagram of the superconducting flux pump having volt-level direct-current voltage output, the superconducting flux pump is cylindrical on the whole. In this way, the cylindrical housing 105 wraps around the three-phase alternating-current core 101 by means of the disc 107 as one part of the direct-current bias core. The direct-current bias core is fixed to the disc 107. One end of the cylindrical housing 105 is fixed around the disc 107. The three-phase alternating-current core and the direct-current bias core are connected and assembled by means of screws. A rectangular notch is formed in the direct-current bias core to allow the superconducting stator to be installed, placed in and taken out.

As an optional implementation, the direct-current bias core is fixed to the disc; one end of the cylindrical housing is fixed around the disc; a magnetic field generated by the direct-current bias core sequentially passes through the disc, the cylindrical housing, the slots and the three-phase alternating-current core to return to the direct-current bias core, and a direct-current bias magnetic field is generated between the slots and the cylindrical housing.

The direct-current bias core of the superconducting flux pump having volt-level direct-current voltage output may be formed by integrated machining or may be formed by separate machining and assembly. One end of the cylindrical housing is fixed to the disc, the direct-current bias core is fixed to the center of the disc, and an opening is formed in a side surface of the cylindrical housing.

As shown in FIG. 4 which illustrates the three-phase alternating-current core 101 of the superconducting flux pump having volt-level direct-current voltage output, the three-phase alternating-current core 101 is generally formed by integrated machining, the middle of the three-phase alternating-current core 101 is cylindrical, the periphery of the three-phase alternating-current core 101 is disc-shaped, and a round copper wire or a flat copper wire is wound in the slots 106 between discs. The number of the slots of the three-phase alternating-current core is not unique. In a case where a greater voltage needs to be output, the number of the slots 106 may be increased properly.

Optionally, the superconducting stator is arranged at the magnetically coupled air gap between the slots 106 and the cylindrical housing 105 by spiral winding.

As an optional implementation, the present invention provides an extended superconducting flux pump having volt-level direct-current voltage output, which is different from the superconducting flux pump having volt-level direct-current voltage output in the above implementations in that the extended superconducting flux pump is provided with two direct-current bias cores and two direct-current bias windings to provide a higher-intensity direct-current bias magnetic field.

As an optional implementation, the extended superconducting flux pump is different from the superconducting flux pump in the above implementations in that the number of slots of three-phase alternating-current core and the number of three-phase alternating-current windings of the extended superconducting flux pump are greatly increased and may be customized according to the demand for an output voltage. The length and number of the direct-current bias cores and the direct-current bias windings are changed according to the length of the three-phase alternating-current core. With the increase in the length of the three-phase alternating-current core, the number of the slots will be increased, and the length of the direct-current bias cores and the direct-current bias windings will also be increased.

The present invention achieves volt-level direct-current voltage output from superconducting flux pumps, thereby realizing quick current regulation and high-current maintenance of superconducting magnets and promoting further development of the excitation technique of the superconducting magnets and industrial application of the superconducting flux pumps.

The present invention adopts the magnetizing principle in flux dynamics, a closed loop is formed by the superconducting stator and a superconducting coil, excitation of magnets is realized without long-term connection to an external direct-current power supply, and because the magnetizing principle is different from the prior art, the dependence of high-temperature superconducting magnets on an expensive direct current source is eliminated, thereby greatly reducing the power supply cost of the high-temperature superconducting magnets.

The present invention does not use a current lead, thus greatly reducing the burden on refrigeration systems and enabling rapid charging of superconducting coils and operation in a persistent current mode; in addition, a current attenuation caused by flux creep and soldering resistance in the operating process is supplemented in real time, thereby greatly reducing energy consumption in the operating process.

### Embodiment 2

Based on the same principle as the method in Embodiment 1 of the present invention, this embodiment of the present invention provides an excitation system based on a superconducting flux pump having volt-level direct-current voltage output, including:

the superconducting flux pump having volt-level direct-current voltage output according to Embodiment 1 and a superconducting closed-loop magnet. The superconducting closed-loop magnet includes a superconducting stator 201 and a superconducting magnet 202. One end of the superconducting stator 201 is arranged at the magnetically coupled air gap of the superconducting flux pump, and the other end of the superconducting stator 201 is connected to the superconducting magnet 202.

After a traveling wave magnetic field and a direct-current bias magnetic field are superimposed, a biased traveling wave magnetic field is generated at the magnetically coupled air gap, and acts on the superconducting stator 201 at the magnetically coupled air gap to generate a direct-current voltage output.

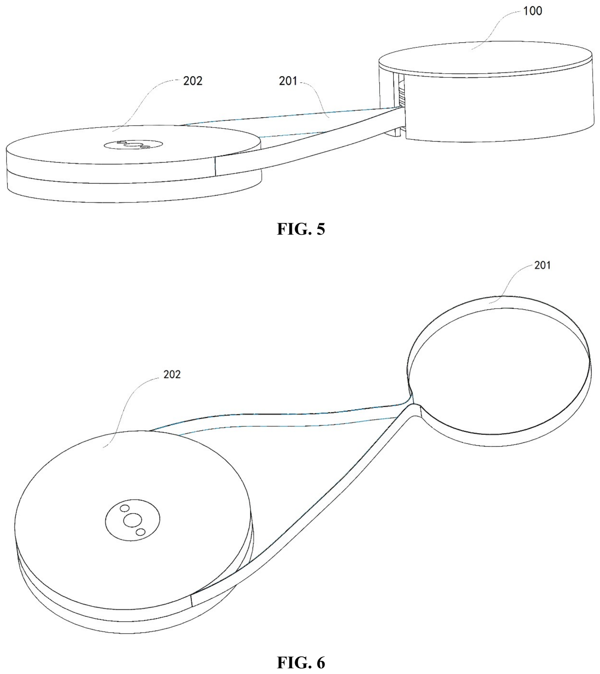

As shown in FIG. 5, as an optional implementation, the installation position of the superconducting stator 201 is kept perpendicular to the moving direction of traveling waves, and the superconducting stator 201 is arranged between the three-phase alternating-current core and the cylindrical housing of the superconducting flux pump 100 to form the magnetically coupled air gap. The superconducting magnet 202 is connected to the superconducting stator 201. In a case where spiral winding is adopted, the superconducting stator 201 needs to be kept perpendicular to the moving direction of the traveling waves to the maximum extent, as shown in FIG. 6 which is a schematic connection diagram of the superconducting magnet 202 and the superconducting stator 201.

As an optional implementation, an excitation system based on an extended superconducting flux pump having volt-level direct-current voltage output includes at least one extended superconducting flux pump and at least one superconducting magnet. The extended superconducting flux pump generates a biased traveling wave magnetic field at a magnetically coupled air gap between a three-phase alternating-current core and a cylindrical housing, and the traveling wave magnetic field drags flux quanta on the superconducting stator to move directionally to output a volt-level direct-current voltage to the superconducting magnet finally.

As an optional implementation, the superconducting stator may be a high-temperature superconducting ReBCO strip, and the superconducting stator and the superconducting magnet are connected in series to form a closed loop. The ReBCO strip includes a Hastelloy layer serving as a substrate, a ReBCO layer and a buffer layer, and ReBCO is a superconducting material, wherein Re indicates rare earth. The operating temperature of the superconducting magnet is below 90 K.

Optionally, the direction of the superconducting stator 201 is perpendicular to the advancing direction of the traveling wave magnetic field generated by the three-phase alternating-current winding.

Optionally, the superconducting stator 201 is arranged at the magnetically coupled air gap of the superconducting flux pump 100 by spiral winding.

The superconducting magnet 202 is formed by winding a superconducting material and is generally formed by winding a double-pancake coil. The superconducting magnet 202 may also be formed by connecting in series or parallel of at least two concentrically stacked double-pancake coils, and the superconducting coils that are stacked concentrically are fixed by means of a corresponding support assembly.

In actual application, the superconducting stator and the superconducting magnet are cooled to a superconducting state by a refrigerator, cooling helium gas or liquid helium.

As an optional implementation, the extended superconducting flux pump adopts a spirally wound superconducting stator, the superconducting magnet is connected to the superconducting flux pump by means of the superconducting stator, and the cylindrical housing of the direct-current bias core is hidden in FIG. 5. The superconducting stator is assembled with the extended superconducting flux pump by spiral winding, thus increasing a direct-current voltage output of the superconducting flux pump. The spiral winding may keep the moving direction of the traveling wave magnetic field perpendicular to the direction of the superconducting stator to the maximum extent.

Optionally, the superconducting magnet may also be formed by connecting in series or parallel of at least one concentrically stacked double-pancake coil, and the superconducting coils that are stacked concentrically are fixed by means of a corresponding support assembly.

The above embodiments are merely preferred ones of the present invention and are not intended to limit the present invention. For those skilled in the art, various modifications and transformations may be made to the present invention. Any modifications, equivalent substitutions and improvements made based on the spirit and principle of the present invention should fall within the protection scope of the present invention.

## Claims

1. A superconducting flux pump having volt-level direct-current voltage output, comprising a three-phase alternating-current core (101), a direct-current bias core (102), a three-phase alternating-current winding (103), a direct-current bias winding (104), and a cylindrical housing (105) disposed around an outer side of the direct-current bias core (102); an end of the direct-current bias core (102) is connected to an end of the cylindrical housing (105); slots (106) are formed in an outer side of the three-phase alternating-current core (101), and the three-phase alternating-current winding (103) is wound in the slots (106) of the three-phase alternating-current core (101); the direct-current bias winding (104) is wound around the outer side of the direct-current bias core (102); an end of the three-phase alternating-current core (101) is arranged close to an end of the direct-current bias core (102); a magnetically coupled air gap is formed between the three-phase alternating-current core (101) and the cylindrical housing (105);
a magnetic field, generated after three-phase power is applied to the three-phase alternating-current winding (103), is conducted through the corresponding core to form an alternating traveling wave magnetic field at the magnetically coupled air gap between the slots (106) and the cylindrical housing (105); a magnetic field generated by the direct-current bias winding (104) is conducted through the corresponding core to generate a direct-current bias magnetic field at the magnetically coupled air gap between the slots (106) and the cylindrical housing (105); and after the traveling wave magnetic field and the direct-current bias magnetic field are superimposed, a biased traveling wave magnetic field is generated at the magnetically coupled air gap, and the alternating traveling wave magnetic field, after being biased by the direct-current bias magnetic field, acts on a superconducting stator (201) at the magnetically coupled air gap to generate a direct-current voltage output.

2. The superconducting flux pump having volt-level direct-current voltage output according to Claim 1, wherein the direct-current bias core (102) is fixed to a disc (107); an end of the cylindrical housing (105) is fixed around the disc (107); the cylindrical housing (105) is disposed around the outer side of the direct-current bias core (102); and a magnetic field generated by the direct-current bias core (102) passes through the disc (107), the cylindrical housing (105), the slots (106) and the three-phase alternating-current core (101) to return to the direct-current bias core (102), and the direct-current bias magnetic field is generated between the slots (106) and the cylindrical housing (105).

3. The superconducting flux pump having volt-level direct-current voltage output according to Claim 1, wherein the direct-current bias winding (104) is arranged at an end of the three-phase alternating-current winding (103), an end of the direct-current bias core (102) is fixed to a disc (107), and an end of the cylindrical housing (105) is fixed around the disc (107).

4. The superconducting flux pump having volt-level direct-current voltage output according to Claim 1, wherein the direct-current bias windings (104) are arranged at two ends of the three-phase alternating-current winding (103), and the direct-current bias core (102) has an end fixed to a disc (107) as well as an end fixed to a disc (107); and the cylindrical housing (105) has an end fixed around one said disc (107) as well as an end fixed around the other disc (107).

5. The superconducting flux pump having volt-level direct-current voltage output according to Claim 1, wherein the traveling wave magnetic field acts on the superconducting stator (201) at the magnetically coupled air gap to generate a direct-current voltage.

6. The superconducting flux pump having volt-level direct-current voltage output according to Claim 1, wherein the superconducting stator (201) is arranged at the magnetically coupled air gap between the slots (106) and the cylindrical housing (105) by spiral winding.

7. An excitation system based on the superconducting flux pump having volt-level direct-current voltage output according to Claim 1, comprising:
the superconducting flux pump having volt-level direct-current voltage output according to Claim 1 and a superconducting closed-loop magnet, wherein the superconducting closed-loop magnet comprises a superconducting stator (201) and a superconducting magnet (202); the superconducting stator (201) has an end arranged at the magnetically coupled air gap of the superconducting flux pump as well as an end connected to the superconducting magnet (202);
after the traveling wave magnetic field and the direct-current bias magnetic field are superimposed, the biased traveling wave magnetic field is generated at the magnetically coupled air gap, and acts on the superconducting stator (201) at the magnetically coupled air gap to generate a direct-current voltage.

8. The excitation system based on the superconducting flux pump having volt-level direct-current voltage output according to Claim 7, wherein the superconducting magnet (202) is formed by connecting in series or parallel of at least one concentrically stacked superconducting double-pancake coil, and multiple said concentrically stacked superconducting coils are fixed by means of a support assembly.

9. The excitation system based on the superconducting flux pump having volt-level direct-current voltage output according to Claim 7, wherein a direction of the superconducting stator (201) is perpendicular to the advancing direction of the traveling wave magnetic field generated by the three-phase alternating-current winding.

10. The excitation system based on the superconducting flux pump having volt-level direct-current voltage output according to Claim 7, wherein the superconducting stator (201) is arranged at the magnetically coupled air gap of the superconducting flux pump by spiral winding.
